# EUROPÄISCHE PATENTSCHRIFT

(11) **EP 0 566 849 B1**
(45) Veröffentlichungstag und Bekanntmachung des Hinweises auf die Patenterteilung: **16.10.1996**
(21) Anmeldenummer: 93103666.9
(22) Anmeldetag: 08.03.1993
(51) Int. Cl.: C08F 283/01, C09D 151/08, C08G 18/63, C08F 283/02, C09D 175/04, C09D 5/03

(54) **Verfahren zur Herstellung von hydroxyfunktionellen Copolymerisaten**
Process for the preparation of copolymers with hydroxy functions
Procédé de préparation de copolymères à fonction hydroxy

(30) Priorität: 20.03.1992 DE 4209035
(43) Veröffentlichungstag der Anmeldung: 27.10.1993
(73) Patentinhaber: BAYER AG, 51368 Leverkusen (DE)
(72) Erfinder: Wamprecht, Christian, Dr., W-4040 Neuss 22 (DE); Meier-Westhues, Hans-Ulrich, Dr., W-5090 Leverkusen 3 (DE); Meixner, Jürgen, Dr., W-4150 Krefeld (DE); Ruf, Günter, Dr., W-4150 Krefeld 1 (DE)

(56) Entgegenhaltungen:
- EP-A- 0 056 971
- EP-A- 0 206 072
- WO-A-92/02590
- US-A- 3 993 849

## Beschreibung

Die Erfindung betrifft ein neues Verfahren zur lösungsmittelfreien Herstellung von hydroxyfunktionellen Copolymerisaten, deren Verwendung als Bindemittelkomponente in Polyurethan-Pulverlacken, einen derartigen Pulverlack und seine Verwendung zur Beschichtung hitzeresistenter Substrate.

Hydroxyfunktionelle Copolymerisate (Polyacrylate) haben sich in den letzten Jahrzehnten einen festen Platz auf dem Beschichtungssektor erobert. Aus ökologischen Gründen gewinnt die Reduzierung der bei der Herstellung und Verarbeitung von hydroxyfunktionellen Polyacrylaten notwendigerweise eingesetzten, organischen Lösungsmittel zunehmend an Bedeutung.

Hydroxyfunktionelle Copolymerisate werden heutzutage üblicherweise in inerten, organischen Lösungsmitteln hergestellt. Dabei wird bei dem sogenannten Zulaufverfahren der größte Teil des Lösungsmittels in einem Polymerisationsreaktor vorgelegt und auf die gewünschte Polymerisationstemperatur aufgeheizt. Anschließend werden die Monomermischung und der Initiator gleichzeitig bei konstanter Temperatur in den Reaktor eingetragen, wobei in dem vorgelegten Lösungsmittel durch radikalisch initiierte Copolymerisation das gewünschte Copolymerisat entsteht. Nach beendeter Dosierung der Monomermischung und des Initiators wird noch eine bestimmte fit nachgerührt, um den Monomerumsatz zu vervollständigen. Die erhaltenen Polymerlösungen weisen in der Regel eine enge Molekulargewichtsverteilung auf und können direkt nach ihrer Herstellung für den jeweiligen Verwendungszweck eingesetzt werden.

Will man jedoch lösungsmittelfreie Polymere gewinnen und verarbeiten, ist man gezwungen, das Lösungsmittel zu entfernen, was meist destillativ oder in Ausdampfaggregaten geschieht.

Diese Prozedur erfordert einen erheblichen apparativen Aufwand. Auch das zurückgewonnene Lösungsmittel kann nicht ohne Aufarbeitung für weitere Polymerisationsreaktionen eingesetzt werden, weil es in der Regel noch mit Restmonomeren verunreinigt ist.

Ein Verfahren zur Herstellung von lösungsmittelfreien, hydroxyfunktionellen Polyacrylaten ist die Massepolymerisation in kontinuierlichen Reaktoren. Nachteilig ist dabei der hohe apparative Aufwand, weil die beim Polymerisationsprozeß nicht umgesetzten Monomeren abdestilliert, quantitativ bestimmt und im richtigen Mengenverhältnis wieder in den Polymerisationsprozeß eingespeist werden müssen. Kontinuierliche Massepolymerisationsverfahren werden beispielsweise beschrieben in EP-A-00 68 024, EP-A-00 96 901, EP-A-01 56 170, US-PS 4 414 370, US-PS 4 529 787 und US-PS 4 546 160.

Solche Massepolymerisationen können jedoch auch diskontinuierlich unter Siedekühlung durchgeführt werden, z.B. beschrieben in DE-OS 1 965 740, DE-AS 1 771 374 und DE-AS 2 422 043. Nachteilig ist hierbei einerseits die Beschränkung der Polymerisationstemperatur und andererseits die Schwankung der Polymerisationstemperatur während der Polymerisation. Außerdem bereitet die stark exotherme Reaktion erhebliche Kühlprobleme, weil die Abführung der Reäktionswärme durch den starken Viskositätsanstieg erschwert wird.

Eine weitere Möglichkeit zur Herstellung von lösungsmittelfreien, hydroxyfunktionellen Polyacrylaten stellt die Verwendung von "reaktiven Lösungsmitteln" dar, welche zunächst als Reaktionsmedium für die radikalische Polymerisation der Monomeren dienen und danach in einem zweiten Reaktionsschritt durch eine polymeranaloge Reaktion an das entstandene Polyacrylat addiert werden (PCT-Anmeldung, Veröffentlichungsnummer: WO 90/03991). In diesem Fall dient ε-Caprolacton als "reaktives Lösungsmittel", welches nach der radikalischen Polymerisation durch katalytische Ringöffnungspolymerisation an die OH-Gruppen des Polyacrylats unter Ausbildung neuer Hydroxylgruppen addiert wird. Nachteilig bei diesem Verfahren ist die Tatsache, daß zwei aufeinanderfolgende Reaktionsschritte notwendig sind, um zum gewünschten lösungsmittelfreien Endprodukt zu gelangen, und daß für den zweiten Reaktionsschritt Zinnkatalysatoren benötigt werden, die dann auch im Endprodukt noch vorhanden sind und bei Kombination mit z.B. Polyisocyanaten die Urethanreaktion katalysieren, was zu einer starken Verringerung der Standzeit entsprechender Lackzubereitungen führt. Durch diese polymeranaloge Reaktion erhöhen sich zudem das Molekulargewicht und die Viskosität der Polymeren, was sich nachteilig auf die Rührbarkeit des Produkts im Reaktionskessel auswirkt.

Eine andere Art von Polymerisationsreaktionen in "reaktiven Lösungsmitteln" wird in der EP-A-00 56 971 beschrieben. Es handelt sich beim Reaktionsmedium um Maleinsäuredialkylester, die in der Regel nicht zur Homopolymerisation neigen. Der niedrigviskose Maleinsäuredialkylester wird bei diesem Verfahren nach und nach durch Reaktion mit den anderen zudosierten Monomeren in die Polymerketten eingebaut, so daß am Ende der Polymerisation ein nahezu 100 %iges Produkt vorliegt. Trotz der guten Rührbarkeit zu Beginn der Polymerisation führt die Bildung des hochmolekularen, nahezu 100 %igen Polymerisats am Ende der Reaktion aufgrund hoher Schmelzviskositäten zu Rührproblemen.

Eine weitere Variante zur Herstellung von lösungsmittelfreien Copolymerisaten sieht die Verwendung von gesättigten oder ungesättigten Polyestern als Reaktionsmedium bzw. Pfropfgrundlage vor. Solche Verfahren sind beispielsweise beschrieben in den Patentanmeldungen EP-A-02 06 072 und EP-A-03 91 271. Nachteilig wirkt sich bei diesen Verfahren schon zu Beginn der Polymerisation die recht hohe Viskosität des "Reaktionsmediums Polyester" aus, was mit einer schiechten Abführung der Reaktionswärme verbunden ist und daher zu Produkten mit stark uneinheitlicher Molekulargewichtsverteilung führt.

Es war daher die der Erfindung zugrundeliegende Aufgabe, ein neues Verfahren zur lösungsmitteltreien Herstellung von hydroxyfunktionellen Copolymerisaten bereitzustellen, das die genannten Nachteile des Standes der Technik nicht aufweist.

Diese Aufgabe konnte durch die Bereitstellung des nachstehend näher beschriebenen Verfahrens gelöst werden.

Gegenstand der Erfindung ist ein Verfahren zur lösungsmittelfreien Herstellung von hydroxyfunktionellen Copolymerisaten durch radikalisch initiierte Copolymerisation von ungesättigten Monomeren, dadurch gekennzeichnet, daß man
A) 5 bis 30 Gew.-Teile einer Polyesterkomponente, bestehend aus mindestens einem Polyesterpolyol mit einer Hydroxylzahl von 40 bis 180 bei einer Säurezahl von <12 und einer Glasübergangstemperatur von -40 bis +80°C, und
B) 1 bis 10 Gew.-Teile einer olefinisch ungesättigten Esterkomponente, bestehend aus mindestens einem Maleinsäuredi(cyclo)alkylester mit 1 bis 12 Kohlenstoffatomen im (Cyclo)Alkylrest,
in einem Polymerisationsreaktor als Reaktionsmedium vorlegt, auf eine Polymerisationstemperatur von 130 bis 200°C aufheizt und anschließend
C) 42 bis 93,5 Gew.-Teile einer Monomermischung, bestehend aus
   a) 0 bis 70 Gew.-Teilen Methylmethacrylat,
   b) 0 bis 60 Gew.-Teilen (Cyclo)Alkylestern der Acryl- und/oder Methacrylsäure mit 2 bis 18 Kohlenstoffatomen im (Cyclo)Alkylrest,
   c) 10 bis 60 Gew.-Teilen Vinylaromaten,
   d) 6 bis 40 Gew.-Teilen Hydroxyalkylester der Acryl- und/oder Methacrylsäure mit 2 bis 6 Kohlenstoffatomen im Hydroxyalkylrest und/oder deren Umsetzungsprodukte eines maximalen Molekulargewichts von 500 mit ε-Caprolacton und
   e) 0 bis 5 Gew.-Teilen olefinisch ungesättigte Carbonsäuren,
      wobei die Summe der Gewichtsteile der Komponenten a) bis e) 100 ergibt,
   und
D) 0,5 bis 8 Gew.-Teilen einer Initiatorkomponente für die radikalische Polymerisation
bei 130 bis 200°C zudosiert, wobei die Summe der Gewichtsteile der Komponenten A) bis D) 100 ergibt.

Gegenstand der Erfindung ist auch die Verwendung der nach diesen Verfahren erhältlichen hydroxyfunktionellen Copolymerisate als Bindemittelkomponente in Polyurethan-Pulverlacken.

Gegenstand der Erfindung ist auch ein Pulverlack, bestehend aus
i) einer Polyolkomponente,
ii) einem Härter, bestehend aus mindestens einem blockierten und/oder unblockierten Polyisocyanat und gegebenenfalls
iii) weiteren Hilfs- und Zusatzmitteln,
dadurch gekennzeichnet, daß die Komponente i) im wesentlichen aus einem nach dem erfindungsgemäßen Verfahren erhaltenen hydroxyfunktionellen Copolymerisat besteht.

Gegenstand der Erfindung ist schließlich auch die Verwendung des Pulverlacks zur Beschichtung beliebiger, hitzeresistenter Substrate, insbesondere zur Beschichtung von Kraftfahrzeugteilen.

Die nach dem erfindungsgemäßen Verfahren erhältlichen hydroxyfunktionellen Copolymerisate weisen eine Hydroxylzahl von 30 bis 200, vorzugsweise 40 bis 150 mg KOH/g auf und besitzen ein mittels Gelpermeationschromatographie (GPC) bestimmbares Molekulargewicht (Gewichtsmittel, Standard Polystyrol) von 1 500 bis 75 000, vorzugsweise 2 000 bis 50 000 sowie eine nach der Differentialthermoanalyse (DIA) bestimmbare Glasübergangstemperatur Tg von 20 bis 100°C, vorzugsweise 25 bis 75°C.

Vorzugsweise werden bei dem erfindungsgemäßen Verfahren 5 bis 25 Gew.-Teile der Komponente A), 1 bis 5 Gew.-Teile der Komponente B), 64 bis 93 Gew.-Teile der Komponente C) und 1 bis 6 Gew.-Teile der Komponente D) eingesetzt.

Bei der Polyesterkomponente A) handelt es sich um mindestens einen hydroxyfunktionellen Polyester mit einer Hydroxylzahl von 40 bis 180 bei einer Säurezahl von <12 und einer Glasübergangstemperatur von -40 bis +80°C. Das aus der Stöchiometrie der eingesetzten Ausgangsmaterialien berechenbare Molekulargewicht der Polyesterpolyole liegt vorzugsweise bei 500 bis 4 000. Bei der Herstellung der hydroxyfunktionellen Polyester können insgesamt 4 Gruppen von Monomerbestandteilen zur Anwendung kommen:
a) (Cyclo)Alkandiole (d.h. zweiwertige Alkohole mit (cyclo)aliphatisch gebundenen Hydroxylgruppen) des Molekulargewichtsbereichs 62 bis 286, wie z.B. Ethandiol, 1,2- und 1,3-Propandiol, 1,2-, 1,3- und 1,4-Butandiol, 1,5-Pentandiol, 1,6-Hexandiol, Neopentylglycol, Cyclohexan-1,4-dimethanol, 1,2- und 1,4-Cyclohexandiol, 2,2-Bis(4-hydroxycyclohexyl)-propan oder Umsetzungsprodukte dieser Diole mit ε-Caprolacton, Ethylenoxid und/oder Propylenoxid mit einem maximalen Molekulargewicht von 520,
b) drei- und höherwertige Alkohole des Molekulargewichtsbereichs 92 bis 254, wie z.B. Trimethylolpropan, Glycerin, Pentaerythrit, Dipentaerythrit
c) Dicarbonsäuren des Molekulargewichtsbereichs 116 bis 600 und/oder deren Anhydride, wie z.B. Phthalsäure, Phthalsäureanhydrid, Isophthalsäure, Tetrahydrophthalsäure, Tetrahydrophthalsäureanhydrid, Hexahydrophthalsäure, Hexahydrophthalsäureanhydrid, Terephthalsäure, Fumarsäure, Maleinsäure, Maleinsäureanhydrid, Bernsteinsäure, Bernsteinsäureanhydrid, Adipinsäure, hydrierte Dimerfettsäuren und gegebenenfalls
d) Monocarbonsäuren, wie z.B. Benzoesäure, 2-Ethylhexansäure, Capronsäure, Caprylsäure, Caprinsäure oder Laurinsäure.

Bei der Herstellung der Polyesterpolyole A) können jeweils beliebige Gemische der Monomerbestandteile a) bis c) und gegebenenfalls d) zum Einsatz kommen, mit der Maßgabe, daß die Auswahl so erfolgt, daß die resultierenden Polyester sowohl OH-Zahlen im Bereich von 40 bis 180 bei Säurezahlen von <12 als auch Glasübergangstemperaturen von -40 bis +80°C aufweisen.

Diese Bedingung wird dann erfüllt, wenn bei der Herstellung der Polyester ein geeignetes Verhältnis von "weichmachenden" Monomerbestandteilen, die zur Erniedrigung der Glasübergangstemperatur der Polyester führen, zu "hartmachenden" Monomeren, die zur Erhöhung der Glasübergangstemperatur führen, zur Anwendung kommt

"Weichmachende" Monomerbestandteile sind beispielsweise aliphatische Diole, wie z.B. 1,4-Butandiol, 1,5-Pentandiol und 1,6-Hexandiol oder aliphatische Dicarbonsäuren, wie z.B. Bernsteinsäure oder Adipinsäure.

"Hartmachende" Monomerbestandteile sind beispielsweise cyclische aromatische Dicarbonsäuren, wie z.B. Phthalsäure, Isophthalsäure und Terephthalsäure oder Diole, wie z.B. Cyclohexandiol-1,4, Cyclohexan-1,4-dimethanol oder Neopentylglycol.

Die Herstellung der Polyester A) erfolgt in an sich bekannter Weise nach Methoden, wie sie beispielsweise in "Ullmanns Enzyklopädie der technischen Chemie", Verlag Chemie Weinheim, 4. Auflage (1980), Band 19, Seiten 61 ff. oder H. Wagner und H.F. Sarx in "Lackkunstharze", Carl Hanser Verlag, München (1971), Seiten 86-152, ausführlich beschrieben sind. Die Veresterung erfolgt gegebenenfalls in Gegenwart einer katalytischen Menge eines üblichen Veresterungskatalysators, wie beispielsweise Säuren, Basen oder Übergangsmetallverbindungen, wie z.B. Titantetrabutylat bei ca. 80 bis 260°C, vorzugsweise 100 bis 240°C.

Die Veresterungsaktion wird so lange durchgeführt, bis die angestrebten Werte für die Hydroxyl- und Säurezahl erreicht sind. Das Molekulargewicht der Polyesterpolyole kann aus der Stöchiometrie der Ausgangsmaterialien (unter Berücksichtung der resultierenden Hydroxyl- und Säurezahlen) berechnet werden.

Die Komponente B) besteht aus mindestens einem Maleinsäuredi(cyclo)alkylester mit 1 bis 12, vorzugsweise 1 bis 8 Kohlenstoffatomen im (Cyclo)Alkylrest. Geeignet sind z.B. Maleinsäuredimethylester, Maleinsäurediethylester, Maleinsäuredi-n-butylester, Maleinsäuredi-2-ethylhexylester, Maleinsäuredi-n-decylester, Maleinsäuredi-n-dodecylester und Maleinsäuredicyclohexylester.

Die Monomerenmischung C) besteht vorzugsweise aus 10 bis 60 Gew.-Teilen Monomeren a), 0 bis 50 Gew.-Teilen Monomeren b), 10 bis 50 Gew.-Teilen Monomeren c), 10 bis 35 Gew.-Teilen Monomeren d) und 0 bis 4 Gew.-Teilen Monomeren e), wobei die Summe der Gewichtsteile der Komponenten a) bis e) 100 ergibt.

Bei den Monomeren a) handelt es sich Methylmethacrylat.

Bei den Monomeren b) handelt es sich um (Cyclo)Alkylester der Acryl- oder Methacrylsäure mit 2 bis 18, vorzugsweise 2 bis 12 Kohlenstoffatomen im (Cyclo)Alkylrest. Beispiele geeigneter bzw. bevorzugt geeigneter Monomerer b) sind Ethyl (meth)acrylat, n-Propyl(meth)acrylat, n-Butyl(meth)acrylat, tert.-Butyl(meth)acrylat, 2-Ethylhexyl(meth)acrylat, Cyclohexylmethacrylat, Neopentylmethacrylat, Isobornylmethacrylat, 3,3,5-Trimethylcyclohexyl(meth)acrylat und Stearyl(meth)acrylat.

Als Monomere c) kommen z.B. Styrol, Vinyltoluol (technisches Isomerengemisch aus m/p-Methylstyrol 60:40) und α-Methylstyrol in Betracht. Styrol ist bevorzugt.

Geeignete Monomere d) sind Hydroxyalkylester der unter b) genannten Säuren mit 2 bis 6, vorzugsweise 2 bis 4 Kohlenstoffatomen im Hydroxyalkylrest, wie z.B. 2-Hydroxyethyl(meth)acrylat, Hydroxypropyl(meth)acrylat (bei der Anlagerung von Propylenoxid an (Meth)Acrylsäure entstehendes Isomerengemisch), 4-Hydroxybutylacrylat oder auch Anlagerungsprodukte mit einem maximalen Molekulargewicht von 500 von ε-Caprolacton an derartige einfache Hydroxyalkylester. Der Begriff "Hydroxyalkylester" soll somit auch Estergruppen aufweisende Reste umfassen, wie sie durch Anlagerung von ε-Caprolacton an einfache Hydroxyalkylester entstehen. Weiterhin sind auch Umsetzungsprodukte von Glycidyl(meth)acrylat mit gesättigten Monocarbonsäuren, sowie Umsetzungsprodukte von (Meth)Acrylsäure mit gesättigten Monoepoxiden, die zusätzlich noch OH-Gruppen tragen können, als "Hydroxyalkylester der (Meth)Acrylsäure" anzusehen und daher ebenfalls als Monomere d) geeignet.

Geeignete Monomere e) sind Acryl- und/oder Methacrylsäure.

Besonders bevorzugt besteht die Monomermischung C) aus
a) 15 bis 55 Gew.-Teilen Methylmethacrylat,
b) 0 bis 40 Gew.-Teilen an Alkylestern der Acryl- und/oder Methacrylsäure mit 2 bis 18 Kohlenstoffatomen im Alkylrest,
c) 10 bis 45 Gew.-Teilen Styrol,
d) 10 bis 30 Gew.-Teilen 2-Hydroxyethylmethacrylat und/oder Hydroxypropylmethacrylat (= Anlagerungsprodukt von Propylenoxid an Methacrylsäure, bestehend im wesentlichen aus 2-Hydroxypropylmethacrylat und 2-Hydroxy-1-methyl-ethyl-methacrylat im Verhältnis von ca. 3:1) und
e) 0 bis 3 Gew.-Teilen Acrylsäure und/oder Methacrylsäure,
wobei die Summe der Gewichtsteile der Komponenten a) bis e) 100 ergibt.

Bei der Durchführung des erfindungsgemäßen Verfahrens können als Monomerenmischung C) innerhalb der oben angegebenen Mengenanteilsgrenzen jeweils beliebige Gemische der Monomeren a) bis e) verwendet werden, mit der Maßgabe, daß diese Auswahl bei der Herstellung der Polyolbindemittel so erfolgt, daß die resultierenden Polyolbindemittel Hydroxylzahlen und Glasübergangstemperaturen innerhalb der obengenannten Bereiche aufweisen.

Diese für die erfindungsgemäße Verwendbarkeit der Copolymerisate wesentliche Bedingung wird dann erfüllt, wenn bei der Herstellung der Copolymerisate ein geeignetes Verhältnis von "weichmachenden" Monomeren, die zur Erniedrigung der Glasübergangstemperatur der Copolymeren führen, zu "hartmachenden" Monomeren, die zur Erhöhung der Glasübergangstemperatur führen, zur Anwendung gelangt.

"Weichmachende" Monomere sind beispielsweise Alkylester der Acrylsäure, wie z.B. Ethylacrylat, n-Butylacrylat, Isobutylacrylat und 2-Ethylhexylacrylat.

"Hartmachende" Monomere sind beispielsweise Alkylester der Methacrylsäure, wie z.B. Methylmethacrylat, Ethylmethacrylat, Isobutylmethacrylat, Cyclohexylmethacrylat, Isopropylmethacrylat, tert.-Butylmethacrylat, Neopentylmethacrylat, Isobornylmethacrylat und 3,3,5-Trimethylcyclohexylmethacrylat, Vinylaromaten, wie z.B. Styrol, Vinyltoluol und α-Methylstyrol.

Geeignete Initiatoren D) sind übliche Radikalstarter, wie z.B. aliphatische Azoverbindungen, wie Azodiisobuttersäurenitril, Azo-bis-2-methylvaleronitril, 1,1'-Azobis-1-cyclohexannitril und 2,2'-Azo-bis-isobuttersäurealkylester; symmetrische Diacylperoxide, wie z.B. Acetyl-, Propionyl- oder Butyrylperoxid, mit Brom-, Nitro-, Methyl- oder Methoxygruppen substituierte Benzoylperoxide, Laurylperoxide; symmetrische Peroxydicarbonate, z.B. Diethyl-, Diisopropyl-, Dicyclohexyl- sowie Dibenzoylperoxydicarbonat; tert.-Butylperoxy-2-ethylhexanoat, tert.-Butylperbenzoat; Hydroperoxide, wie beispielsweise tert.-Butylhydroperoxid, Cumolhydroperoxid; Dialkylperoxide, wie Dicumylperoxid; tert.-Butylcumylperoxid oder Di-tert.-butylperoxid; bevorzugt ist Di-tert.-butylperoxid.

Zur Regelung des Molekulargewichtes der Polyolbindemittel können ebenfalls übliche Regler bei der Durchführung des erfindungsgemäßen Verfahrens eingesetzt werden. Im Falle der Verwendung von solchen Reglern, werden diese der Monomermischung C) zugegeben. Beispielhaft genannt seien als Regler tert.-Dodecylmercaptan, n-Dodecylmercaptan und Mercaptoethanol. Die Regler können üblicherweise in Mengen von 0,1 bis 5 Gew.-%, bezogen auf die Gesamtmenge der Monomermischung C), zugegeben werden.

Die Polymerisationstemperatur liegt bei 130 bis 200°C, vorzugsweise bei 140 bis 180°C.

Bei der Durchführung des erfindungsgemäßen Verfahrens werden in einem Polymerisationsreaktor die Polyesterkomponente A) und mindestens ein Maleinsäureester B) vorgelegt und auf die gewünschte Polymerisationstemperatur aufgeheizt. Unter diesen Bedingungen stellt das vorgelegte Gemisch aus A) und B) ein Reaktionsmedium dar, dessen Viskosität niedrig genug ist, um die Reaktionswärme der durchzuführenden radikalischen Copolymerisation gut abzuführen und damit eine konstante Polymerisationstemperatur zu gewährleisten. Insbesondere der Gehalt an Maleinsäureester, welche in der Regel niedrigviskose Flüssigkeiten sind, trägt zur gewünschten geringen Viskosität des Reaktionsmediums bei.

Die Monomermischung C) und der Initiator D) werden bei Erreichen der gewünschten Polymerisationstemperatur, vorzugsweise gleichzeitig beginnend, dem Reaktionsmedium, bestehend aus A) und B) zudosiert. Dabei werden die zudosierten Bestandteile der Monomermischung C) in dem Reaktionsmedium durch radikalisch initiierte Copolymerisation copolymerisiert, wobei auch der vorgelegte Maleinsäuredialkylester, der in der Regel nicht zur Homopolymerisation neigt, nach und nach in die entstehenden Polymerketten eingebaut wird. Die Polyesterkomponente A) weist beim erfindungsgemäßen Verfahren vorzugsweise keine ungesättigten Doppelbindungen auf. Um spezielle Produkteigenschaften zu erzielen, kann es jedoch auch angezeigt sein, Polyester einzusetzen, die einen geringen Anteil polymerisierbarer Doppelbindungen aufweisen und somit Copolymerisationsreaktionen eingehen können.

Nach der Zudosierung der Monomermischung C) und des Initiators D) wird noch eine gewisse Zeit bei der gewünschten Polymerisationstemperatur nachgerührt, um die Polymerisationsreaktion zu vervollständigen. Danach ist es erforderlich, durch Anlegen eines Vakuums, noch eventuell vorhandene flüchtige Bestandteile, z.B. Restmonomeren und Spaltprodukte aus dem Initiator, destillativ zu entfernen. Anschließend wird das immer noch auf Polymerisationstemperatur gehaltene Endprodukt, das nun ein homogenes Gemisch darstellt, eventuell durch Anlegen eines geringen Überdruckes, aus dem Polymerisationsreaktor abgelassen und z.B. auf Alublechschalen verteilt. Nach Abkühlung auf z.B. Raumtemperatur erhält man die gewünschten Polyolbindemittel als Festharze, die dann ihrer erfindungsgemäßen Verwendung zugeführt werden können.

Im allgemeinen erfolgt die Polymerisation bei dem erfindungsgemäßen Verfahren in einem geschlossenen Druckreaktor, wobei der Druck während der Zudosierphase ständig ansteigt und Werte bis zu 20 bar erreichen kann. Bei Verwendung hochsiedender Monomerbestandteile, die keinen Rückfluß unterhalb der gewählten Polymerisationstemperatur hervorrufen, kann die Polymerisation auch unter Atmosphärendruck durchgeführt werden.

Die nach dem erfindungsgemäßen Verfahren erhaltenen Polyhydroxylverbindungen stellen wertvolle Bindemittelkomponenten für Polyurethan-Pulverlacke dar und bilden den wesentlichen Polyolbestandteil, gegebenenfalls neben weiteren Hydroxylgruppen aufweisenden Polyestern und/oder Polyacrylaten, der erfindungsgemäßen Pulverlacke.

Für diese erfindungsgemäße Verwendung geeignete Reaktionspartner sind Polyisocyanate mit freien und/oder blockierten, vorzugsweise blockierten Isocyanatgruppen. Insbesondere bei Raumtemperatur feste Polyisocyanate mit an tertiäre aliphatische Kohlenstoffatome gebundenen Isocyanatgruppen können auch in unblockierter Form eingesetzt werden.

Blockierte Polyisocyanate, die auch erfindungsgemäß eingesetzt werden können, werden beispielsweise beschrieben in den Veröffentlichungen DE-OS 21 05 777, DE-OS 25 42 191, DE-OS 27 35 497, DE-OS 28 12 252, DE-OS 29 46 085, DE-OS 30 04 876, DE-OS 3o 39 824, DE-OS 34 34 881. Blockierungsmittelfreie Polyisocyanate für Pulverlacke werden beispielsweise beschrieben in den Veröffentlichungen EP-A-00 45 994, EP-A-00 45 996, EP-A-00 45 998, EP-A-02 54 152.

Als weitere Bestandteile können die erfindungsgemäßen Pulverlacke in der Pulverlacktechnologie übliche Hilfs- und Zusatzstoffe enthalten. Dabei handelt es sich beispielsweise um Katalysatoren für die Polyurethanreaktion, wie z.B. Zinn(II)salze von C₆- bis C₁₂-Alkancarbonsäuren (Zinn(II)-hexanoat, Zinn(II)-ethylhexanoat) oder Zinn(IV)-Verbindungen (Dibutylzinndilaurat); Verlaufsmittel, wie z.B. Polybutylacrylat oder solchen auf Basis von Polysilikon; Lichtschutzmittel, wie z.B. sterisch gehinderte Amine; UV-Absorber, wie z.B. Benztriazole oder Benzophenone und Pigmente, wie z.B. Titandioxid.

Zur Herstellung der gebrauchsfertigen Pulverlacke kann beispielsweise dergestalt vorgegangen werden, daß die Einzelkomponenten innig miteinander vermischt und beispielsweise in Extrudern oder Knetern bei Temperaturen oberhalb des Schmelzbereichs der Einzelkomponenten, z.B. bei 80 bis 120°C, zu einem homogenen Material vereinigt werden. Der ausgetragene erstarrte Feststoff wird gemahlen und durch Sieben von Kornanteilen oberhalb der gewünschten Korngrößen, beispielsweise oberhalb 0,1 mm, befreit. Bei dieser Art der Herstellung der erfindungsgemäßen Pulverlacke tritt im allgemeinen noch keine nennenswerte Reaktion zwischen den Einzelkomponenten ein.

Die Art und die Mengenverhältnisse der eingesetzten Pulverlack-Bestandteile werden bei der Herstellung der Pulverlacke im übrigen so gewählt, daß auf jede Hydroxylgruppe 0,5 bis 1,5, vorzugsweise 0,8 bis 1,2 (blockierte) Isocyanatgruppen entfallen.

Die so hergestellten Pulverlacke können nach üblichen Pulverauftragsverfahren, wie z.B. elektrostatischem Pulversprühen oder Wirbelsintern, auf die zu überziehenden hitzeresistenten Substrate aufgebracht werden. Die Härtung der Überzüge kann durch Erhitzen auf Temperaturen von 120 bis 220°C, vorzugsweise 140 bis 200°C, erfolgen. Man erhält dabei harte, glänzende, lösungsmittel- und chemikalienbeständige und ausreichend elastische Überzüge mit hervorragenden Korrosionsschutzeigenschaften und einer guten Wärmefarbstabilität.

Es können beliebige, hitzeresistente Substrate, wie beispielsweise Glas und Metalle, beschichtet werden. Besonders bevorzugt werden die erfindungsgemäßen Pulverlacke zur Beschichtung von Metallen, insbesondere von Kraftfahrzeugteilen, verwendet.

Die in den nachfolgenden Beispielen genannten Teile und Prozente sind, sofern nicht anders angegeben, Gewichtsteile bzw. Gewichtsprozente.

### Beispiele

### I Allgemeine Arbeitsvorschrift zur Durchführung des erfindungsgemäßen Verfahrens

In einem 10-l-Edelstahldruckreaktor mit Rühr-, Kühl- und Heizvorrichtung sowie elektronischer Temperatursteuerung wird Teil I vorgelegt und auf Reaktionstemperatur aufgeheizt. Dann werden in den geschlossenen Reaktor gleichzeitig beginnend Teil II (Zugabe über einen Zeitraum von insgesamt 2,5 Stunden) und Teil III (Zugabe über einen Zeitraum von insgesamt 3 Stunden) bei konstanter Temperatur eindosiert. Nach Zugabe von Teil III wird 1 Stunde bei der Polymerisationstemperatur nachgerührt. Dann werden eventuell aus dem Initiator entstandene, flüchtige Spaltprodukte und eventuell vorhandene Restmonomeren durch kurzes Anlegen eines Vakuums von ca. 15 mbar bei der Polymerisationstemperatur destillativ entfernt. Anschließend wird das entstandene, heiße, niedrigviskose Produkt zum Abkühlen auf Alublechschalen aus dem Reaktor abgelassen. Nach Erstarren der Harzschmelze erfolgt deren mechanische Zerkleinerung.

Im Produktionsmaßstab erfolgt die Abkühlung des abgelassenen, heißen Produkts zweckmäßig auf Kühlbändern, denen eine Granulieranlage nachfolgt.

Die Reaktionstemperaturen und die Zusammensetzungen der Teile I bis III sind in Tabelle I zusammen mit den Kenndaten der erhaltenen Produkte aufgeführt.

### Ausgangsmaterialien:

Polyester P1:
   Polyesterpolyol der OH-Zahl 143 mg KOH/g, der Säurezahl 3 mg KOH/g, hergestellt durch Umsetzung von von 4 Mol Hexandiol-1,6, 1 Mol Trimethylolpropan, 2,5 Mol Isophthalsäure, 0,5 Mol Phthalsäureanhydrid und 1 Mol Adipinsäure.
Polyester P2:
   Polyesterpolyol der OH-Zahl 109 mg KOH/g, der Säurezahl 1,9 mg KOH/g, hergestellt durch Umsetzung von 4 Mol Hexandiol-1,6, 0,75 Mol Trimethylolpropan, 2 Mol Isophthalsäure, 1 Mol Hexahydrophthalsäureanhydrid und 1 Mol Adipinsäure.
Polyisocyanat I:
   Mit ε-Caprolactam blockiertes Umsetzungsprodukt von 4,4'-Diisocyanatodicyclohexylmethan mit 1,6-Hexandiol mit einem Gehalt an blockierten Isocyanatgruppen (berechnet als NCO, Molekulargewicht = 42) von 9,7 %.

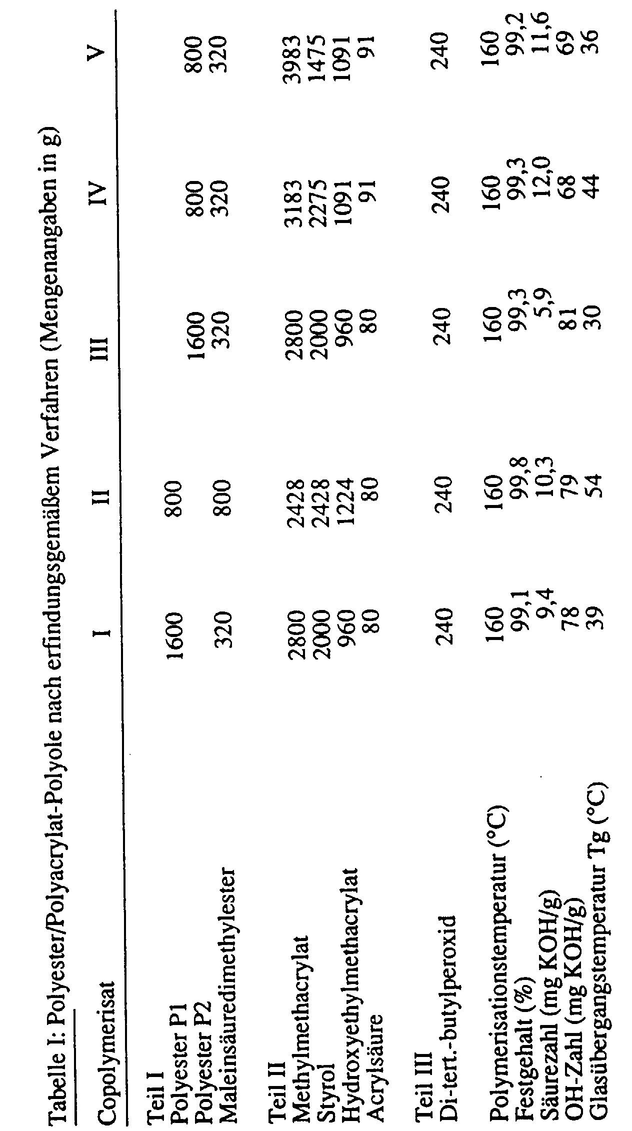

### II Herstellung der erfindungsgemäßen Pulverlacke

Die Copolymerisate I bis V werden jeweils mit Polyisocyanat I und anderen Hilfsund Zusatzmitteln in einem handelsüblichen Extruder bei 100 bis 110°C aufgeschmolzen und homogenisiert. Nach dem Erstarren der ausgetragenen Schmelze wird das Produkt gemahlen, durch Sieben von Anteilen mit einem über 0,1 mm liegenden Teilchendurchrmesser befreit, mittels einer elektrostatischen Sprüheinrichtung auf Prüfbleche appliziert und anschließend 15 Minuten bei 180°C ausgehärtet.

Die Lösemittelbeständigkeit der ca. 50 µm dicken Lackfilme wird durch einen Wischtest mit einem acetongetränkten Wattebausch geprüft. Angegeben wird die Anzahl der Doppelhübe, nach denen der Lackfilm ohne sichtbare Veränderung bleibt. Mehr als 50 Doppelhübe pro Film wurden nicht durchgeführt.

In Tabelle II sind die jeweiligen Formulierungen in Gewichtsprozenten sowie die ermittelten Prüfergebnisse der Lackfilme aufgeführt.

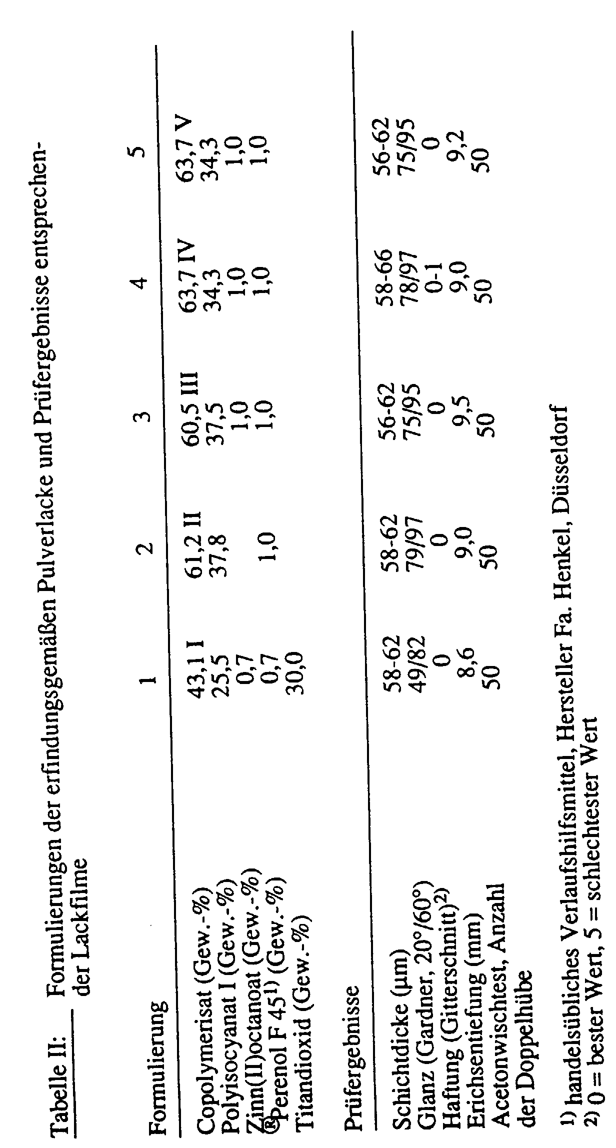

## Patentansprüche

1. Verfahren zur lösungsmittelfreien Herstellung von hydroxyfunktionellen Copolymerisaten durch radikalisch initiierte Copolymerisation von ungesättigten Monomeren, dadurch gekennzeichnet, daß man
A) 5 bis 30 Gew.-Teile einer Polyesterkomponente, bestehend aus mindestens einem Polyesterpolyol mit einer Hydroxylzahl von 40 bis 180 bei einer Säurezahl von <12 und einer Glasübergangstemperatur von -40 bis +80°C, und
B) 1 bis 10 Gew.-Teile einer olefinisch ungesättigten Esterkomponente, bestehend aus mindestens einem Maleinsäuredi(cyclo)alkylester mit 1 bis 12 Kohlenstoffatomen im (Cyclo)Alkylrest,
in einem Polymerisationsreaktor als Reaktionsmedium vorlegt, auf eine Polymerisationstemperatur von 130 bis 200°C aufheizt und anschließend
C) 42 bis 93,5 Gew.-Teile einer Monomermischung, bestehend aus
a) 0 bis 70 Gew.-Teilen Methylmethacrylat,
b) 0 bis 60 Gew.-Teilen (Cyclo)Alkylestern der Acryl- und/oder Methacrylsäure mit 2 bis 18 Kohlenstoffatomen im (Cyclo)-Alkylrest,
c) 10 bis 60 Gew.-Teilen Vinylaromaten,
d) 6 bis 40 Gew.-Teilen Hydroxyalkylester der Acryl- und/oder Methacrylsäure mit 2 bis 6 Kohlenstoffatomen im Hydroxyalkylrest und/oder deren Umsetzungsprodukte eines maximalen Molekulargewichts von 500 mit ε-Caprolacton und
e) 0 bis 5 Gew.-Teilen olefinisch ungesättigte Carbonsäuren,
wobei die Summe der Gewichtsteile der Komponenten a) bis e) 100 ergibt,
und
D) 0,5 bis 8 Gew.-Teilen einer Initiatorkomponente für die radikalische Polymerisation
bei 130 bis 200°C zudosiert, wobei die Summe der Gewichtsteile der Komponenten A) bis D) 100 ergibt.

2. Verfahren gemäß Anspruch 1, dadurch gekennzeichnet, daß 5 bis 25 Gew.-Teile der Komponente A), 1 bis 5 Gew.-Teile der Komponente B), 64 bis 93 Gew.-Teile der Komponente C) und 1 bis 6 Gew.-Teile der Komponente D) eingesetzt werden.

3. Verfahren gemäß Anspruch 1 und 2, dadurch gekennzeichnet, daß die Monomermischung C) besteht aus
a) 15 bis 55 Gew.-Teilen Methylmethacrylat,
b) 0 bis 40 Gew.-Teilen Alkylester der Acryl- und/oder Methacrylsäure mit 2 bis 18 Kohlenstoffatomen im Alkylrest,
c) 10 bis 45 Gew.-Teilen Styrol,
d) 10 bis 30 Gew.-Teilen Hydroxyethylmethacrylat und/oder Hydroxypropylmethacrylat,
e) 0 bis 3 Gew.-Teilen Acryl- und/oder Methacrylsäure,
wobei die Summe der Gew.-Teile der Komponenten a) bis e) 100 ergibt.

4. Verfahren gemäß den Ansprüchen 1 bis 3, dadurch gekennzeichnet, daß die Polymerisationstemperatur 140 bis 180°C beträgt.

5. Verfahren gemäß den Ansprüchen 1 bis 4, dadurch gekennzeichnet, daß Initiatoren auf Peroxidbasis eingesetzt werden.

6. Verwendung der nach dem Verfahren gemäß den Ansprüchen 1 bis 5 erhältlichen hydroxyfunktionellen Copolymerisate als Bindemittelkomponente in Polyurethan-Pulverlacken.

7. Pulverlack, bestehend aus
i) einer Polyolkomponente,
ii) einem Härter, bestehend aus mindestens einem blockierten und/oder unblockierten Polyisocyanat und gegebenenfalls
iii) weiteren Hilfs- und Zusatzmitteln,
dadurch gekennzeichnet, daß die Komponente i) im wesentlichen aus einem gemäß Anspruch 1 erhaltenem hydroxyfunktionellen Copolymerisat besteht.

8. Verwendung des Pulverlacks gemäß Anspruch 7 zur Beschichtung beliebiger, hitzeresistenter Substrate.

9. Verwendung gemäß Anspruch 8 zur Beschichtung von Kraftfahrzeugteilen.

## Claims

1. A process for the solvent-free production of hydroxy-functional copolymers by radical-initiated copolymerization of unsaturated monomers, characterized in that
A) 5 to 30 parts by weight of a polyester component comprising at least one polyester polyol having a hydroxyl number of 40 to 180 at an acid value of < 12 and a glass transition temperature of -40 to +80 °C and
B) 1 to 10 parts by weight of an olefinically unsaturated ester component comprising at least one maleic acid di(cyclo)alkyl ester having 1 to 12 carbon atoms in the (cyclo)alkyl group
are charged into a polymerization reactor as the reaction medium and heated to a polymerization temperature of 130 to 200 °C, and subsequently
C) 42 to 93.5 parts by weight of a monomer mixture comprising
a) 0 to 70 parts by weight of methyl methacrylate,
b) 0 to 60 parts by weight of (cyclo)alkyl esters of acrylic and/or methacrylic acid having 2 to 18 carbon atoms in the (cyclo)alkyl group,
c) 10 to 60 parts by weight of vinyl aromatics,
d) 6 to 40 parts by weight of hydroxyalkyl esters of acrylic and/or methacrylic acid having 2 to 6 carbon atoms in the hydroxyalkyl group and/or their reaction products of maximum molecular weight 500 with ε-caprolactone and
e) 0 to 5 parts by weight of olefinically unsaturated carboxylic acids,
wherein the sum of the parts by weight of components a) to e) is 100,
and
D) 0.5 to 8 parts by weight of an initiator component for the radical polymerization
are metered in at 130 to 200 °C, wherein the sum of the parts by weight of components A) to D) is 100.

2. A process according to Claim 1, characterized in that 5 to 25 parts by weight of component A), 1 to 5 parts by weight of component B), 64 to 93 parts by weight of component C) and 1 to 6 parts by weight of component D) are utilised.

3. A process according to Claims 1 and 2, characterized in that the monomer mixture C) comprises
a) 15 to 55 parts by weight of methyl methacrylate,
b) 0 to 40 parts by weight of alkyl esters of acrylic and/or methacrylic acid having 2 to 18 carbon atoms in the alkyl group,
c) 10 to 45 parts by weight of styrene,
d) 10 to 30 parts by weight of hydroxyethyl methacrylate and/or hydroxypropyl methacrylate,
e) 0 to 3 parts by weight of acrylic and/or methacrylic acid,
wherein the sum of the parts by weight of components a) to e) is 100.

4. A process according to Claims 1 to 3, characterized in that the polymerization temperature is 140 to 180 °C.

5. A process according to Claims 1 to 4, characterized in that peroxide-based initiators are utilised.

6. The use of the hydroxy-functional copolymers obtainable by the process according to Claims 1 to 5 as the binder component in polyurethane powder coatings.

7. A powder coating comprising
i) a polyol component,
ii) a hardener comprising at least one blocked and/or unblocked polyisocyanate and optionally
iii) further auxiliary substances and additives,
characterized in that component i) substantially comprises a hydroxy-functional copolymer obtained according to Claim 1.

8. The use of the powder coating according to Claim 7 for the coating of any heat-resistant substrates.

9. The use according to Claim 8 for the coating of motor vehicle components.

## Revendications

1. Procédé pour la préparation sans solvants de copolymères à fonctionnalité hydroxyle par copolymérisation à déclenchement radicalaire de monomères insaturés, caractérisé en ce qu'on dépose au préalable
A) de 5 à 30 parties en poids d'un composant de polyester constitué par au moins un polyesterpolyol possédant un indice d'hydroxyle de 40 à 180 à un indice d'acide <12 et une température de transition vitreuse de -40 à +80°C, et
B) de 1 à 10 parties en poids d'un composant d'ester à insaturation oléfinique constitué par au moins un ester di(cyclo)alkylique d'acide maléique contenant de 1 à 12 atomes de carbone dans le radical (cyclo)alkyle,
dans un réacteur de polymérisation, comme milieu réactionnel, on le chauffe à une température de polymérisation de 130 à 200°C et on procède ensuite à l'addition dosée de
C) de 42 à 93,5 parties en poids d'un mélange de monomères constitué par
a) de 0 à 70 parties en poids de méthacrylate de méthyle,
b) de 0 à 60 parties en poids d'esters (cyclo)alkyliques d'acide acrylique et/ou méthacrylique contenant de 2 à 18 atomes de carbone dans le radical (cyclo)alkyle,
c) de 10 à 60 parties en poids de composés vinylaromatiques,
d) de 6 à 40 parties en poids d'esters hydroxyalkyliques d'acide acrylique et/ou méthacrylique contenant de 2 à 6 atomes de carbone dans le radical hydroxyalkyle et/ou de leurs produits réactionnels d'un poids moléculaire maximal de 500 avec la ε-caprolactone, et
e) de 0 à 5 parties en poids d'acides carboxyliques à insaturation oléfinique,
la somme des parties en poids des composants a) à e) étant égale à 100, et
D) de 0,5 à 8 parties en poids d'un composant d'initiateur pour la polymérisation radicalaire,
à une température de 130 à 200°C, la somme des parties en poids des composants A) à D) étant égale à 100.

2. Procédé selon la revendication 1, caractérisé en ce qu'on met en oeuvre de 5 à 25 parties en poids du composant A), de 1 à 5 parties en poids du composant B), de 64 à 93 parties en poids du composant C) et de 1 à 6 parties en poids du composant D).

3. Procédé selon les revendications 1 et 2, caractérisé en ce que le mélange de monomères C) est constitué par
a) de 15 à 55 parties en poids de méthacrylate de méthyle,
b) de 0 à 40 parties en poids d'esters alkyliques d'acide acrylique et/ou méthacrylique contenant de 2 à 18 atomes de carbone dans le radical alkyle,
c) de 10 à 45 parties en poids de styrène,
d) de 10 à 30 parties en poids de méthacrylate d'hydroxyéthyle et/ou de méthacrylate d'hydroxypropyle,
e) de 0 à 3 parties en poids d'acide acrylique et/ou méthacrylique,
la somme des parties en poids des composants a) à e) étant égale à 100.

4. Procédé selon les revendications 1 à 3, caractérisé en ce que la température de polymérisation s'élève de 140 à 180°C.

5. Procédé selon les revendications 1 à 4, caractérisé en ce qu'on met en oeuvre des initiateurs à base de peroxyde.

6. Utilisation des copolymères hydroxyfonctionnels obtenus conformément au procédé selon les revendications 1 à 5, comme composant de liant dans des laques, des peintures ou des vernis pulvérulents de polyuréthanne.

7. Laque, peinture ou vernis pulvérulent constitué par
i) un composant de polyol,
ii) un durcisseur constitué par au moins un polyisocyanate bloqué et/ou non bloqué, et éventuellement
iii) d'autres adjuvants et additifs,
caractérisé en ce que le composant i) est constitué essentiellement par un copolymère hydroxyfonctionnel obtenu conformément à la revendication 1.

8. Utilisation de la laque, de la peinture ou du vernis pulvérulent selon la revendication 7 pour l'enduction de n'importe quels substrats résistant à la chaleur.

9. Utilisation selon la revendication 8 pour l'enduction d'accessoires de véhicules automobiles.
